# EUROPEAN PATENT APPLICATION

(11) **EP 1 944 200 A1**
(43) Date of publication of application: **16.07.2008**
(21) Application number: 06822760.2
(22) Date of filing: 01.11.2006
(51) Int. Cl.: B60R 21/18, B60R 21/20

(54) **OCCUPANT RESTRAINT APPARATUS**

(30) Priority: 02.11.2005 JP 2005319706
(71) Applicant: TAKATA CORPORATION, Minato-ku, Tokyo 106-8510 (JP)
(72) Inventor: ITOGA, Yasuo, Tokyo 106-8510 (JP)
(74) Representative: Banzer, Hans-Jörg
(86) International application number: PCT/JP2006/321831
(87) International publication number: WO 2007/052690

(57) **Abstract**

Regarding a vehicle equipped with an occupant restraining apparatus having a bag whose internal gas pressure is adjustable in accordance with a type of collision of the vehicle, when the vehicle is involved in a frontal collision of a predetermined magnitude or greater, an inflator 40 is activated to inflate a seat bag 20 and a lap bag 34. At the time of the frontal collision, a valve element 63 of a gas-leaking valve 60 moves forward so that the gas-leaking valve 60 becomes in a closed state. Therefore, gas from the inflator 40 does not leak through a hole 55 and can be supplied to the bags 20 and 34 while high pressure is maintained. This allows the bags 20 and 34 to be inflated immediately so that the internal gas pressure of the bags 20 and 34 is increased. When the vehicle is involved in a side collision, the valve element 63 of the gas-leaking valve 50 receives absolutely or substantially no force in the forward direction. For this reason, a thin diameter portion 63a of the valve element 63 remains facing the gas-leaking hole 55, causing a portion of the gas within the gas flow path 54 to flow outward of the manifold 50 through the hole 55.

## Description

### Technical Field

The present invention relates to an occupant restraining apparatus for restraining an occupant when a vehicle is involved in a collision, and particularly, to an occupant restraining apparatus for use in a vehicle that has a bag provided on a belt for restraining an occupant and an inflator for supplying gas into the bag.

### Background Art

Known types of occupant restraining apparatuses are, for example, a so-called air belt apparatus having an airbag attached to a part of a seatbelt or an airbag constituting a part of a seatbelt, and a so-called inflatable seatbelt apparatus.

Japanese Unexamined Patent Application Publication No. 2000-25545 describes an air belt apparatus in which a bag is inflatable by means of gas from an inflator. In this air belt apparatus, when the internal gas pressure of the bag reaches an appropriate value upon completion of the inflation of the bag as a result of high-pressure gas supplied from the inflator, the gas from the inflator is discharged to the outside. This maintains the internal gas pressure of the bag at the appropriate value and thus enhances the shock-absorbing effect.

As a system for restraining an automobile occupant at the time of a collision, there has been proposed an apparatus that raises a front portion of a seat cushion upward during a vehicle collision to prevent a so-called submarine phenomenon. Specifically, a submarine phenomenon can occur when an occupant wearing a seatbelt slips through a space below a lap belt during a frontal collision. For example, Japanese Unexamined Patent Application Publication No. 10-217818 describes a vehicle seat in which the front portion of the seat cushion can be pushed upward by an airbag.

Japanese Unexamined Patent Application Publication No. 2002-145002 discloses an occupant restraining apparatus that restrains an occupant by inflating three components, which are a seat bag provided at a front portion of a seat, a shoulder belt, and a lap belt. In Japanese Unexamined Patent Application Publication No. 2002-145002, the seat bag at the front portion of the seat, the shoulder belt, and the lap belt are inflated by means of a single gas generator.

In the occupant restraining apparatus disclosed in Japanese Unexamined Patent Application Publication No. 2002-145002, the inflatable shoulder belt and the inflatable lap belt have one of their ends connected to separate tongues. The shoulder belt and the lap belt are latched to a buckle device by means of their tongues. The buckle device and the tongues are provided with gas supply paths for supplying the gas from the gas generator to the shoulder belt and the lap belt.
Patent Document 1: Japanese Unexamined Patent Application Publication No. 10-217818
Patent Document 2: Japanese Unexamined Patent Application Publication No. 2000-25545
Patent Document 3: Japanese Unexamined Patent Application Publication No. 2002-145002

### Summary of the Invention

An object of the present invention is to provide an occupant restraining apparatus having a bag whose internal gas pressure is adjustable in accordance with a type of collision of a vehicle. Specifically, for example, when the vehicle is involved in a frontal collision, an occupant can be securely restrained by setting the internal gas pressure of the bag of an air belt apparatus to a high level. On the other hand, in the case of a side collision, the shock-absorbing amount can be increased by setting the internal gas pressure of the bag to a relatively lower level.

An occupant restraining apparatus for a vehicle according to the present invention includes a bag provided on a belt for restraining an occupant, and an inflator that supplies gas into the bag. An internal gas pressure of the bag is adjustable in accordance with a type of collision of the vehicle.

In this occupant restraining apparatus, the internal gas pressure of the bag at the time of a side collision of the vehicle may be lower than the internal gas pressure of the bag at the time of a frontal collision.

This occupant restraining apparatus may further include gas-leaking means that allows a portion of the gas from the inflator to leak outward at the time of the side collision so as to reduce the internal gas pressure of the bag.

### Brief Description of the Drawings

[Fig. 1] Fig. 1 is a perspective view showing a frame of a seat equipped with an occupant restraining apparatus according to an embodiment.
[Fig. 2] Fig. 2 is a perspective view showing the frame of the seat equipped with the occupant restraining apparatus according to the embodiment at the time of inflation.
[Fig. 3] Fig. 3 is a cross-sectional view of a manifold of the occupant restraining apparatus.
[Fig. 4] Figs. 4a and 4b are cross-sectional views taken along line IV-IV in Fig. 3, Fig. 4a showing an open state of a gas-leaking valve and Fig. 4b showing a closed state of the gas-leaking valve.

### Detailed Description

In the present invention, the internal gas pressure of a bag provided on a belt is adjustable in accordance with the type of collision of a vehicle so that, for example, the internal gas pressure of the bag can be set to a high level at the time of a frontal collision whereas the internal gas pressure of the bag can be set to a low level at the time of a side collision.

Due to simplicity reasons, the internal gas pressure of the bag is preferably adjusted by allowing a portion of gas from the inflator to leak to the outside. However, other alternatives are permissible, such as providing two or more inflators or using an inflator with a gas-pressure-adjustable function.

An embodiment of the present invention will be described below with reference to the drawings.

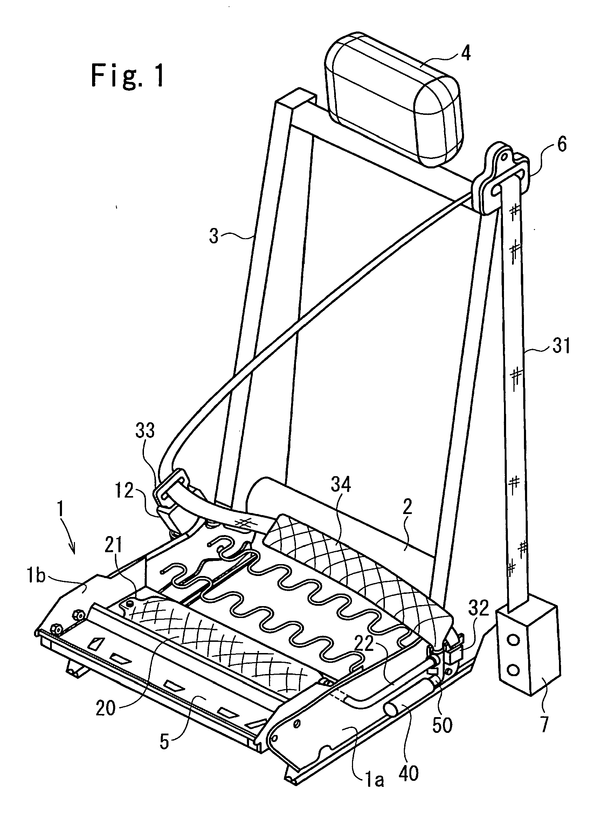

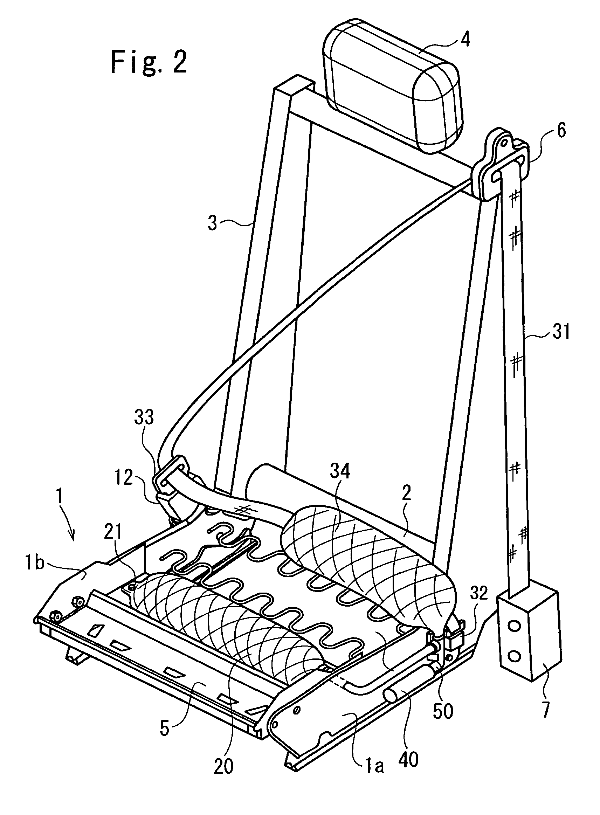

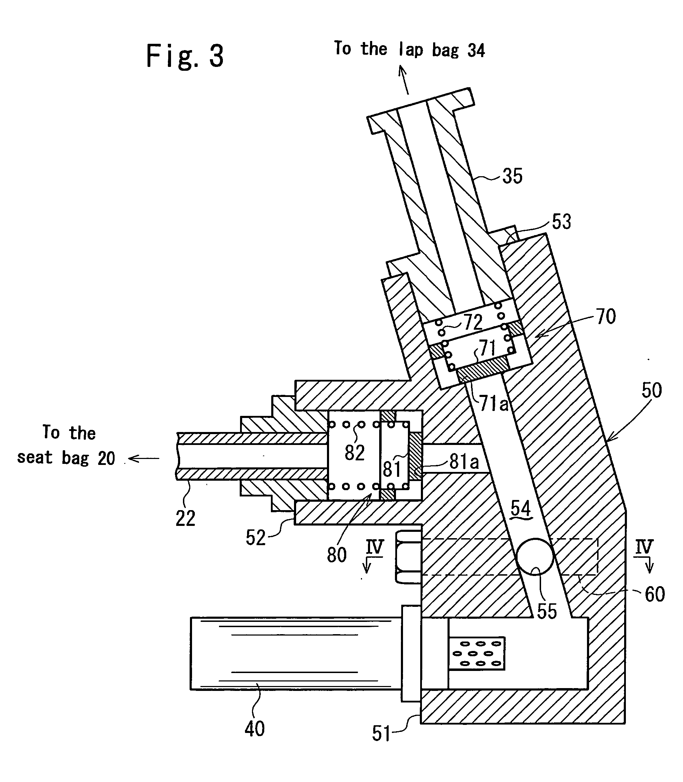

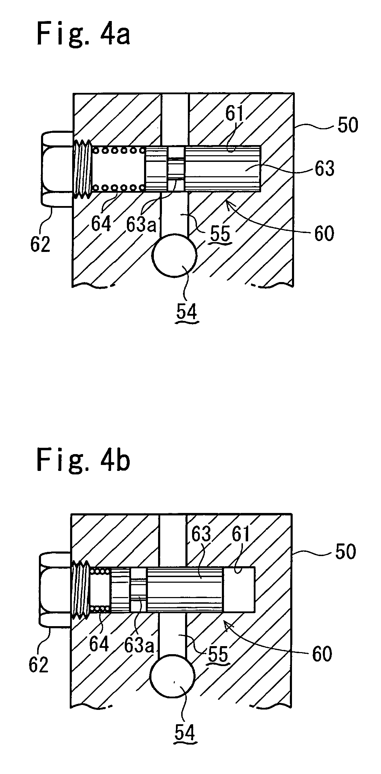

Figs. 1 and 2 are perspective views of a seat frame of an automobile equipped with an occupant restraining apparatus according to the embodiment. Specifically, Fig. 1 shows a state where a seat bag and a lap bag are not inflated, whereas Fig. 2 shows a state where the seat bag and the lap bag are inflated. Fig. 3 is a longitudinal cross-sectional view of a manifold. Figs. 4a and 4b are cross-sectional views taken along line IV-IV in Fig. 3 and respectively show an open state and a closed state of a gas-leaking valve provided in the manifold.

The frame constituting a seat of the automobile includes a base frame 1 and a back frame 3 that is rotatably connected to the base frame 1 by means of a support shaft 2 and a reclining device. An upper portion of the back frame 3 has a headrest 4 attached thereto.

The base frame 1 includes left and right side frames 1a and 1b and a seat pan 5 bridged between front portions of the side frames 1a and 1b. Reference numeral 6 denotes a shoulder anchor for a seatbelt, and reference numeral 7 denotes a seatbelt retractor.

An inflatable seat bag 20 is disposed above the seat pan 5. The seat bag 20 extends in the left-right width direction of the seat. Ear-shaped fixing segments 21 and 21 are provided at opposite ends of the seat bag 20 in the longitudinal direction (i.e. the left-right direction) thereof. These fixing segments 21 and 21 are fixed to the seat pan 5 with bolts.

Although not shown, the seat bag 20 includes a main bag body folded in an elongated shape, and a tubular mesh webbing that surrounds the folded main bag body. The mesh webbing is formed of a knit fabric that is expandable in its radial direction but is substantially non-expandable in its longitudinal direction (i.e. the left-right direction of the seat).

One end of the seat bag 20 in the longitudinal direction thereof (i.e. an end proximate to the side frame 1a in this embodiment) is provided with a gas inlet. This gas inlet has a gas supply pipe 22 connected thereto, which extends from an inflator 40 to be described hereinafter.
The gas supply pipe 22 is disposed along an outer side surface of the side frame 1a.

A lap bag 34 and a webbing 31 are provided in an extendable fashion along a front side of a seated occupant. The webbing 31 is formed of an ordinary non-expandable belt material. An intermediate portion of the webbing 31 is hooked through, for example, a through anchor of a tongue 33. The rear end of the webbing 31 is hooked through the shoulder anchor 6 provided at an upper section of a side surface of the vehicle cabin, such as a pillar, and is connected to the seatbelt retractor 7 in a retractable manner.

The front end of the webbing 31 is connected to one end of the lap bag 34, and the other end of the lap bag 34 is connected to the side frame 1a by means of an anchor portion 32.

An outer side surface of the side frame 1b is provided with a buckle device 12 to which the tongue 33 is connected in a detachable fashion.

Although not shown, the lap bag 34 includes an inflatable main bag body and a tubular cover that covers the main bag body. Normally, the main bag body is folded in a flat and elongated shape. In this embodiment, when the main bag body is in a non-inflated state, the cover has a size that fits around the outer periphery of the folded main bag body, but when the main bag body is inflated, the cover expands in the circumferential direction thereof to permit the inflation of the main bag body.

In this embodiment, the cover is formed of the same knit fabric as that used for the mesh webbing of the seat bag 20. In other words, the knit fabric used for the cover is expandable in the circumferential direction but is substantially non-expandable in the longitudinal direction. Therefore, when the main bag body is inflated, the meshes of the cover expand in the circumferential direction with the stretching of the cover in the circumferential direction.
As a result, the size of the cover in the longitudinal direction becomes smaller. This causes the webbing 31 to become tighter, whereby the webbing 31 becomes in close contact with the occupant's body.

The lap bag 34 receives gas from the inflator 40 via a duct 35 and a manifold 50.

The manifold 50 is attached to the anchor portion 32, and the inflator 40 is attached to the manifold 50.

As shown in Fig. 3, the manifold 50 has a gas inlet 51 to which a gas discharge portion of the inflator 40 is connected, gas outlets 52 and 53 respectively for the seat bag and the lap bag, a gas flow path 54 through which the gas inlet 51 and the gas outlets 52 and 53 communicate with each other, a gas-leaking hole 55 through which the gas from the gas flow path 54 leaks, a gas-leaking valve 60 provided in the gas-leaking hole 55, and check valves 80 and 70 respectively provided in the gas outlets 52 and 53.

The gas-leaking hole 55 is provided so as to allow the gas flow path 54 and the outside space of the manifold 50 to communicate with each other.

As shown in Fig. 4, the gas-leaking valve 60 has a round valve hole 61 extending perpendicularly to a hole axis direction of the gas-leaking hole 55, a valve element 63 slidably fitted within the valve hole 61, a stopper 62 fixed so as to close an end of the valve hole 61, and a compression coil spring 64 interposed between the stopper 62 and the valve element 63 while storing pressure therein so as to bias the valve element 63 in a direction away from the stopper 62. At least one of an end surface of the stopper 62 and an end surface of the valve element 63 may be provided with a buffer.

The valve element 63 has a substantially cylindrical shape with a thin diameter portion 63a provided at an intermediate section thereof in the longitudinal direction.

As shown in Fig. 4a, when an external force is not applied to the valve element 63, the valve element 63 is located at an innermost position in the valve hole 61. In this state, the thin diameter portion 63a faces the gas-leaking hole 55, which implies that the gas flow path 54 and the outside space of the manifold 50 are in communication with each other via the gas-leaking hole 55 and the thin diameter portion 63a.

When the valve element 63 receives a predetermined force or more towards the front of the vehicle body, namely, towards the left in Figs. 4a and 4b, the valve element 63 moves leftward in Figs. 4a and 4b against the biasing force of the compression coil spring 64. This causes the thin diameter portion 63a to be out of alignment with the gas-leaking hole 55 as shown in Fig. 4b. Accordingly, the gas-leaking valve 60 becomes in a closed state, whereby the gas flow path 54 becomes blocked off from the outside space of the manifold 50.

The check valves 70 and 80 respectively have check-valve elements 71 and 81, springs 72 and 82 for biasing the check-valve elements 71 and 81, and valve seat portions 71a and 81a on which the check-valve elements 71 and 81 are placed. The check valves 70 and 80 allow the gas from the inflator 40 to flow toward the bags 20 and 34 and prevent the gas from flowing in the reverse direction.

When a vehicle equipped with the above-described occupant restraining apparatus is involved in a frontal collision of a predetermined magnitude or greater, the inflator 40 is activated. Then, the gas from the inflator 40 is supplied to the seat bag 20 and the lap bag 34 through the pipe 22 and the duct 35, thereby inflating the bags 20 and 34. The inflated seat bag 20 restrains the waist portion of the occupant from moving forward. Likewise, the inflated lap bag 34 restrains the waist portion of the occupant and its vicinity as well as absorbing the shock.
In addition, when the lap bag 34 is inflated, the length of the lap bag 34 in the longitudinal direction is reduced, thereby causing the webbing 31 to become tighter. Thus, the upper torso of the occupant is restrained.

At the time of the frontal collision, the valve element 63 of the gas-leaking valve 60 moves forward as shown in Fig. 4b, causing the gas-leaking valve 60 to become in a closed state. Therefore, the gas from the inflator 40 does not leak through the hole 55 and can be supplied to the bags 20 and 34 while high pressure is maintained. This allows the bags 20 and 34 to be inflated immediately so that the internal gas pressure of the bags 20 and 34 is increased. With the increase in the internal gas pressure of the lap bag 34, the occupant can be tightly restrained as described above.

Since the check valves 70 and 80 are provided in this embodiment, a backflow of gas from the bags 20 and 34 is prevented even as the pressure of gas supplied from the inflator 40 begins to decrease. Consequently, the internal gas pressure of the bags 20 and 34 can be maintained at a high level over a long period of time.

When the vehicle is involved in a side collision of a predetermined magnitude or greater, the inflator 40 is activated so that gas is supplied to the bags 20 and 34. At the time of the side collision, the valve element 63 of the gas-leaking valve 50 receives absolutely or substantially no force in the forward direction. For this reason, the thin diameter portion 63a of the valve element 63 remains facing the gas-leaking hole 55, causing a portion of the gas within the gas flow path 54 to flow outward of the manifold 50 through the hole 55. Thus, the internal gas pressure of the lap bag 34 at the time of inflation becomes lower, whereby the amount of shock absorbed by the lap bag 34 for the occupant increases.

In this embodiment, the gas-leaking hole 55 is disposed upstream of the check valves 70 and 80 so that the pressure of gas to be supplied to the bags 20 and 34 can be lower for a side collision. Alternatively, the gas-leaking hole 55 may be disposed downstream of the check valve 70 so that only the pressure of gas to be supplied to the lap bag 34 can be lowered.

As a further alternative, the spring constant of the spring 82 may be set to a high value so that the gas is not supplied to the seat bag 20 at the time of a side collision.

Although the valve hole 61 is round shaped and the valve element 63 is substantially cylindrical shaped in the above embodiment, the valve hole 61 may alternatively be a rectangular hole and the valve element 63 may alternatively have a rectangular columnar shape. Furthermore, the valve element may be provided with a through hole instead of a thin diameter portion.

In the present invention, instead of giving the thin diameter portion 63a a small uniform diameter as shown in the drawings, the thin diameter portion 63a may alternatively have a tapered shape whose diameter decreases gradually in the longitudinal direction of the valve element 63. In detail, the thin diameter portion 63a in Fig. 4 may have a tapered shape with the diameter thereof decreasing towards the left. With this shape, the amount of gas leaking through the gas-leaking hole 55 becomes smaller as the magnitude of a frontal collision becomes greater.

The check valves 70 and 80 can be omitted, or only the check valve 70 may be omitted.

In the present invention, the seat bag 20 and the lap bag 34 may be inflated by means of separate inflators.

In the present invention, the seat bag 20 can be omitted.

In the present invention, the gas pressure of the lap bag may be adjusted by means of two or more inflators or a multi-step-type inflator.

In the present invention, the gas leakage may be made to occur in the case of a rear collision or a diagonal collision, in addition to a side collision.

The above embodiment is an example of the present invention, and therefore, the present invention is not limited to the above embodiment.
This application is based on Japanese Patent Application (No. 2005-319706) filed on November 2, 2005, the entire contents of which are incorporated herein by reference.

## Claims

1. An occupant restraining apparatus for a vehicle, comprising a bag provided on a belt for restraining an occupant; and an inflator that supplies gas into the bag,
wherein an internal gas pressure of the bag is adjustable in accordance with a type of collision of the vehicle.

2. The occupant restraining apparatus according to Claim 1, wherein the bag comprises a lap bag.

3. The occupant restraining apparatus according to Claim 1, wherein the internal gas pressure of the bag at the time of a side collision of the vehicle is lower than the internal gas pressure of the bag at the time of a frontal collision.

4. The occupant restraining apparatus according to Claim 3, further comprising gas-leaking means that allows a portion of the gas from the inflator to leak outward at the time of the side collision so as to reduce the internal gas pressure of the bag.

5. The occupant restraining apparatus according to Claim 4, wherein the gas-leaking means includes
a manifold having a gas inlet, a gas outlet, and a gas flow path through which the inlet and the outlet communicate with each other,
a gas-leaking hole for allowing the gas to leak outward of the manifold from the gas flow path, and
a valve provided in the gas-leaking hole.
